# EUROPEAN PATENT APPLICATION

(11) **EP 4 641 174 A1**
(43) Date of publication of application: **29.10.2025**
(21) Application number: 23907202.8
(22) Date of filing: 22.12.2023
(51) Int. Cl.: G01N 21/84, G01N 21/85

(54) **IMAGING DEVICE AND IMAGING METHOD**

(30) Priority: 23.12.2022 JP 2022206330; 24.02.2023 JP 2023027707
(71) Applicant: Daikin Industries, Ltd., Osaka-shi, Osaka 530-0001 (JP)
(72) Inventor: KITAMURA, Masaki, Osaka-Shi, Osaka 530-0001 (JP); OSAWA, Masanori, Osaka-Shi, Osaka 530-0001 (JP); KISHIDA, Hiroshi, Osaka-Shi, Osaka 530-0001 (JP); MORI, Daisuke, Osaka-Shi, Osaka 530-0001 (JP); TANAKA, Katsuya, Osaka-Shi, Osaka 530-0001 (JP)
(74) Representative: Goddar, Heinz J.
(86) International application number: PCT/JP2023/046220
(87) International publication number: WO 2024/135842

(57) **Abstract**

A photographing apparatus includes a first photographing part configured to photograph a photographing target from a first side of a direction perpendicular to a first direction, a second photographing part configured to photograph the photographing target from a second side opposite to the first side, a first illumination part located between the first photographing part and the photographing target and configured to illuminate the photographing target from the first side when the first photographing part photographs the photographing target and when the second photographing part photographs the photographing target, and a second illumination part located between the second photographing part and the photographing target and configured to illuminate the photographing target from the second side when the first photographing part photographs the photographing target and when the second photographing part photographs the photographing target.

## Description

### TECHNICAL FIELD

The present disclosure relates to a photographing apparatus and a photographing method.

### BACKGROUND ART

Patent Document 1 discloses an inspection device that inspects an inspection target conveyed in one direction along a conveyance path and includes two inspection units arranged along a conveyance direction of the inspection target. Patent Document 1 discloses that the inspection units are arranged on one side and the other side of a direction crossing the conveyance path. Patent Document 1 further discloses that the inspection unit includes two transmitted light illumination means that emit light toward the inspection target and have different emission directions, and two imaging means that respectively image transmitted light emitted from the two transmitted light illumination means and transmitted through the inspection target.

### RELATED ART DOCUMENTS

### PATENT DOCUMENT

Patent Document 1: Japanese Unexamined Patent Application Publication No. 2015-028459

### SUMMARY OF THE INVENTION

### PROBLEMS TO BE SOLVED BY THE INVENTION

For example, in inspection of a product in a production line, it is required to photograph a photographing target from both sides of the production line.

The present disclosure provides a technique that enables photographing of a photographing target from both sides of a production line.

### MEANS FOR SOLVING THE PROBLEMS

A photographing apparatus according to a first aspect includes:
a first photographing part configured to photograph a photographing target from a first side of a direction perpendicular to a first direction;
a second photographing part configured to photograph the photographing target from a second side opposite to the first side;
a first illumination part located between the first photographing part and the photographing target and configured to illuminate the photographing target from the first side when the first photographing part photographs the photographing target and when the second photographing part photographs the photographing target; and
a second illumination part located between the second photographing part and the photographing target and configured to illuminate the photographing target from the second side when the first photographing part photographs the photographing target and when the second photographing part photographs the photographing target.

According to the photographing apparatus of the first aspect, the photographing target can be photographed from both sides of a direction perpendicular to a first direction.

A photographing apparatus according to a second aspect is the photographing apparatus according to the first aspect, wherein the first photographing part, the first illumination part, the photographing target, the second illumination part, and the second photographing part are arranged on the same plane.

A photographing apparatus according to a third aspect is the photographing apparatus according to the first or second aspect, wherein the first photographing part, the first illumination part, the photographing target, the second illumination part, and the second photographing part are arranged on the same axis.

A photographing apparatus according to a fourth aspect is the photographing apparatus according to any one of the first through third aspects, wherein the first photographing part photographs the photographing target through the first illumination part, and the second photographing part photographs the photographing target through the second illumination part.

A photographing apparatus according to a fifth aspect is the photographing apparatus according to any one of the first through fourth aspects, wherein each of the first illumination part and the second illumination part includes a transparent light guide plate having a first main surface and a second main surface, light being incident from an end surface propagates through the transparent light guide plate, and light propagating inside the light guide plate emits from the first main surface or the second main surface of the light guide plate, whichever is closer to the photographing target.

A photographing apparatus according to a sixth aspect is the photographing apparatus according to any one of the first through fifth aspects further includes a third photographing part that photographs the photographing target from the first side.

A photographing apparatus according to a seventh aspect is the photographing apparatus according to any one of the first through sixth aspects further includes a fourth photographing part that photographs the photographing target from the second side.

A photographing apparatus according to an eighth aspect is the photographing apparatus according to any one of the first through seventh aspects, wherein the photographing target is conveyed in a first direction a photographing direction of each of the first photographing part and the second photographing part is perpendicular to the first direction, a light-emitting surface of each of the first illumination part and the second illumination part is parallel to the first direction, and the first photographing part and the second photographing part photograph the photographing target during conveyance of the photographing target.

A photographing apparatus according to a ninth aspect is the photographing apparatus according to any one of the first through eighth aspects further includes a moving part configured to move the first photographing part, the first illumination part, the second photographing part, and the second illumination part, wherein the first photographing part and the second photographing part photograph the photographing target while the moving part moves the first photographing part, the first illumination part, the second photographing part, and the second illumination part.

A photographing apparatus according to a tenth aspect is the photographing apparatus according to any one of the first through ninth aspects, wherein the photographing target is a flat multi-hole tube.

A photographing method according to a first aspect using a photographing apparatus including:
a first photographing part configured to photograph a photographing target from a first side;
a second photographing part configured to photograph the photographing target from a second side opposite to the first side;
a first illumination part located between the first photographing part and the photographing target and configured to illuminate the photographing target from the first side; and
a second illumination part located between the second photographing part and the photographing target and configured to illuminate the photographing target from the second side,
the method includes:
   each of the first photographing part and the second photographing part photographing the photographing target when the first illumination part illuminates the photographing target from the first side, and
   each of the second photographing part and the second photographing part photographing the photographing target when the second illumination part illuminates the photographing target from the second side.

According to the photographing method of the first aspect, a photographing target can be photographed from both sides of a direction perpendicular to the first direction.

### BRIEF DESCRIPTION OF THE DRAWINGS

[FIG. 1] FIG. 1 is a top view illustrating a schematic configuration of a photographing apparatus according to a first embodiment.
[FIG. 2] FIG. 2 is a side view illustrating a schematic configuration of the photographing apparatus according to the first embodiment.
[FIG. 3] FIG. 3 is a front view of an illumination part in the photographing apparatus according to the first embodiment.
[FIG. 4] FIG. 4 is a cross-sectional view of an illumination part in the photographing apparatus according to the first embodiment.
[FIG. 5] FIG. 5 is a top view illustrating a schematic configuration of the photographing apparatus according to a second embodiment.
[FIG. 6] FIG. 6 is a top view illustrating a schematic configuration of a photographing apparatus according to a third embodiment.
[FIG. 7] FIG. 7 is a diagram illustrating a use state of a photographing apparatus according to a present embodiment.
[FIG. 8] FIG. 8 is a top view illustrating a schematic configuration of a photographing apparatus according to a fourth embodiment.
[FIG. 9] FIG. 9 is a diagram illustrating a modified example of an illumination part of the photographing apparatus according to the present embodiment.
[FIG. 10] FIG. 10 is a top view illustrating a schematic configuration of a modified example of the photographing apparatus according to the second embodiment.
[FIG. 11] FIG. 11 is a diagram illustrating an image taken by the photographing apparatus according to the present embodiment.
[FIG. 12] FIG. 12 is a diagram illustrating a photographing target of the photographing apparatus according to the present embodiment.
[FIG. 13] FIG. 13 is a diagram illustrating a photographing target of the photographing apparatus according to the present embodiment.
[FIG. 14] FIG. 14 is a diagram illustrating photographing using the photographing apparatus according to the present embodiment.

### DESCRIPTION OF EMBODIMENTS

Specific examples of a photographing apparatus of the present disclosure will be described below with reference to the drawings. Note that the present disclosure is not limited to these examples, but is defined by the scope of the claims, and is intended to include all modifications within the meaning and scope equivalent to the scope of the claims.

In the description of the specification and the drawings according to each embodiment, components having substantially the same or corresponding functional configurations are denoted by the same reference numerals, and redundant description may be omitted. In addition, for easy understanding, the scale of each part in the drawings may be different from the actual scale.

In directions such as parallel, right angle, orthogonal, horizontal, vertical, up and down, left and right, and front and rear, deviation is allowed to the extent that the effect of the embodiment is not impaired. The shape of a corner is not limited to a right angle, and may be rounded. The terms "parallel", "perpendicular", "orthogonal", "horizontal", and "vertical" may include "substantially parallel", "substantially perpendicular", "substantially orthogonal", "substantially horizontal", and "substantially vertical", respectively.

For example, "substantially parallel" means that two lines or two surfaces are not completely parallel to each other but can be treated as parallel to each other within a range allowed in manufacturing. Similarly to the term "substantially parallel", the terms "substantially perpendicular", "substantially orthogonal", "substantially horizontal", and "substantially vertical" are intended to include the cases where the positional relationship between two lines or two surfaces is within a range allowed in manufacturing.

### <<First Embodiment>>

A photographing apparatus according to a first embodiment will be described. A photographing apparatus according to a first embodiment includes a first photographing part that photographs a photographing target from a first side, and a second photographing part that photographs the photographing target from a second side opposite to the first side. The photographing apparatus according to the first embodiment includes a first illumination part that is located between the first photographing part and the photographing target and configured to illuminate the photographing target from the first side when the first photographing part photographs the photographing target and when the second photographing part photographs the photographing target. The photographing apparatus according to the first embodiment further includes a second illumination part located between the second photographing part and the photographing target and configured to illuminate the photographing target from the second side when the first photographing part photographs the photographing target and when the second photographing part photographs the photographing target.

A photographing method using the photographing apparatus according to the first embodiment will also be described according to another aspect. In the photographing method using the photographing apparatus according to the first embodiment, when the first illumination part illuminates a photographing target from the first side, each of the first photographing part and the second photographing part photographs the photographing target. In the photographing method using the photographing apparatus according to the first embodiment, when the second illumination part illuminates the photographing target from the second side, each of the first photographing part and the second photographing part photographs the photographing target.

### <Photographing Apparatus 1>

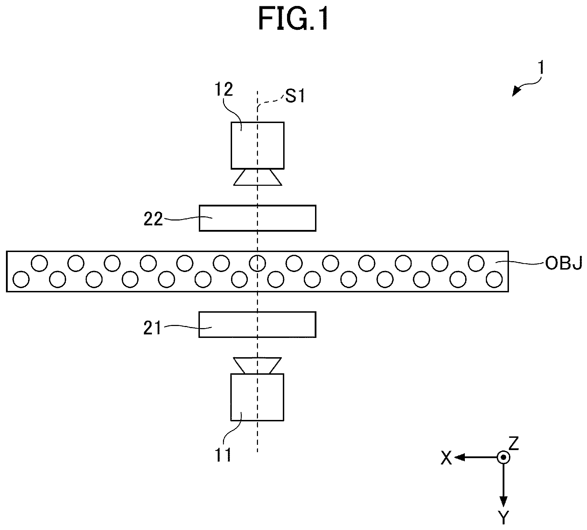

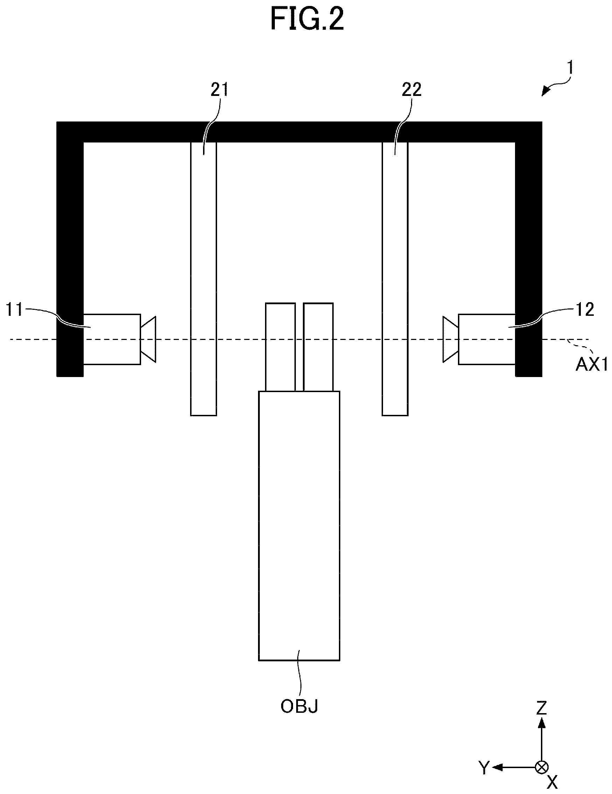

The photographing apparatus according to the first embodiment will be described using a photographing apparatus 1, which is an example of the photographing apparatus according to the first embodiment. FIG. 1 is a top view illustrating a schematic configuration of a photographing apparatus 1 as an example of the photographing apparatus according to the first embodiment. FIG. 2 is a side view illustrating a schematic configuration of the photographing apparatus 1 as an example of the photographing apparatus according to the first embodiment.

In the drawings, for convenience of description, a virtual three dimensional coordinate system (XYZ orthogonal coordinate system) including an X axis, a Y axis, and a Z axis (XYZ axes) orthogonal to each other may be set. For example, in a case where a coordinate axis perpendicular to the drawing sheet is depicted as an encircled black dot, this means that the coordinate axis is directed toward the front with respect to the drawing sheet. In the case where a coordinate axis is depicted as an encircled cross mark, it means that the coordinate axis is directed toward the rear with respect to the drawing sheet.

However, the coordinate system is defined for the sake of description, and does not limit the posture of the photographing apparatus or the like according to the present embodiment.

In the following drawings, the Y-axis direction is a direction along which the photographing part 11 and the photographing part 12 are arranged. The X-axis direction and the Z-axis direction are perpendicular to the Y-axis direction and are perpendicular to each other.

A diagram of an object viewed from the +Y side in the direction opposite to the Y-axis direction is referred to as a front-view diagram. A view of an object from the +Y side in the direction opposite to the Y-axis direction is referred to as a side view. A diagram of an object viewed from the -X side in the X-axis direction is referred to as a side view diagram. A view of an object from the -X side in the X-axis direction is referred to as a side view. A diagram of an object viewed from the +Z side in the direction opposite to the Z-axis direction is referred to as a top view diagram. A view of an object from the +Z side in the direction opposite to the Z-axis direction is referred to as a top view.

With reference to a front view, the X-axis direction may be referred to as a "left-right direction", the Y-axis direction may be referred to as a "front-rear direction", and the Z-axis direction may be referred to as an "up-down direction". With respect to an object, the +X side may be referred to as the "left side", the -X side may be referred to as the right side, the +Y side may be referred to as the "front side", the -Y side may be referred to as the "rear side", the +Z side may be referred to as the "upper side", and the -Z side may be referred to as the "lower side".

The photographing apparatus 1 photographs a photographing target OBJ from the +Y side and the -Y side. The photographing apparatus 1 includes a photographing part 11, a photographing part 12, an illumination part 21, and an illumination part 22. In the photographing apparatus 1, the photographing part 11, the illumination part 21, the photographing target OBJ, the illumination part 22, and the photographing part 12 are arranged on a plane S1 parallel to the YZ plane. In other words, the photographing part 11, the illumination part 21, the photographing target OBJ, the illumination part 22, and the photographing part 12 are arranged on the same plane. In the photographing apparatus 1, the photographing part 11, the illumination part 21, the photographing target OBJ, illumination part 22, and the photographing part 12 are arranged on an axis AX1 parallel to the Y-axis direction. In other words, the photographing part 11, the illumination part 21, the photographing target OBJ, the illumination part 22, and the photographing part 12 are arranged on the same axis.

In the photographing apparatus 1, the photographing part 11, the illumination part 21, the photographing target OBJ, the illumination part 22, and the photographing part 12 are aligned in this order from the +Y side, along the Y-axis direction.

In the present disclosure, the case where the photographing part 11, the illumination part 21, the photographing target OBJ, the illumination part 22, and the photographing part 12 are arranged on the same plane is not limited to the case where they are arranged on the same plane in a strict sense. For example, in the present disclosure, the case where the photographing part 11, the illumination part 21, the photographing target OBJ, the illumination part 22, and the photographing part 12 are arranged on the same plane includes a case where they are arranged on the same plane within an accuracy range in which a camera, an illumination device, and the like are usually installed.

In the present disclosure, the case where the photographing part 11, the illumination part 21, the photographing target OBJ, the illumination part 22, and the photographing part 12 are arranged on the same axis is similarly not limited to the case where they are arranged on the same axis in a strict sense. For example, in the present disclosure, the case where the photographing part 11, the illumination part 21, the photographing target OBJ, the illumination part 22, and the photographing part 12 are arranged on the same axis includes a case where they are arranged on the same axis within an accuracy range for a usual installation of a camera, an illumination device, and the like.

The photographing part 12 and the illumination part 22 may be aligned so as to be symmetrical to the photographing part 11 and the illumination part 21 with respect to the photographing target.

In the photographing apparatus according to the present embodiment, for example, a heat exchanger used in an air conditioner may be the photographing target OBJ. In the case where a heat exchanger used in the air conditioner as the photographing target, the photographing apparatus according to the present embodiment can check the brazing state of the pipe of the heat exchanger.

The components of the photographing apparatus 1 will be described in detail.

### (Photographing Part 11 and Photographing Part 12)

Each of the photographing part 11 and the photographing part 12 photographs the photographing target OBJ. Each of the photographing part 11 and the photographing part 12 is, for example, a video camera or a still camera.

The photographing part 11 photographs the photographing target OBJ from the +Y side. The photographing part 12 photographs the photographing target OBJ from the -Y side. In other words, the photographing part 12 photographs the photographing target OBJ from the opposite side of the photographing part 11.

The photographing part 12 performs photographing at the same time as the photographing part 11 performs photographing. The photographing part 11 and the photographing part 12 simultaneously perform photographing, and thus the photographing target OBJ can be simultaneously photographed in the front-rear direction (the Y-axis direction). By simultaneously photographing the photographing target OBJ from the front-rear direction (the Y-axis direction), a portion of interest in the photographing target OBJ can be observed from the entirety of the photographing target OBJ. In the present disclosure, the case where the photographing part 12 and the photographing part 11 perform photographing simultaneously is not limited to the case where the timing of photographing by the photographing part 12 completely coincides with the timing of photographing by the photographing part 11. For example, in the present disclosure, the case where the photographing part 12 and the photographing part 11 perform photographing simultaneously includes a case where the timings coincide with each other within a range based on an operation specification of the photographing part 11 or the photographing part 12.

The photographing part 12 may perform photographing not only at the same time as the photographing part 11, but also at a time shifted to either before or after the time at which the photographing part 11 performs photographing, for example.

Each of the photographing part 11 and the photographing part 12 may be movable.

### (Illumination Part 21 and Illumination Part 22)

Each of the illumination part 21 and the illumination part 22 illuminates the photographing target OBJ. Each of the illumination part 21 and the illumination part 22 is a light source including, for example, a light-emitting diode (LED), a laser diode (LD), or the like as a light-emitting element.

The illumination part 21 is located between the photographing part 11 and the photographing target OBJ. The illumination part 21 illuminates the photographing target OBJ from the +Y side. The illumination part 22 is located between the photographing part 12 and the photographing target OBJ. The illumination part 22 illuminates the photographing target OBJ from the -Y side.

The photographing part 11 photographs the photographing target OBJ through the illumination part 21. The photographing part 12 photographs the photographing target OBJ through the illumination part 22.

Each of the illumination part 21 and the illumination part 22 is maintained in an ON state. By maintaining the illumination part 21 and the illumination part 22 in an ON state, the photographing target OBJ is always illuminated by the illumination part 21 and the illumination part 22. By maintaining the illumination part 21 and the illumination part 22 in an ON state, the photographing target OBJ is illuminated by the illumination part 21 and the illumination part 22 when the photographing part 11 and the photographing part 12 photograph the photographing target OBJ.

In other words, when the photographing part 11 photographs the photographing target OBJ and when the photographing part 12 photographs the photographing target OBJ, the illumination part 21 illuminates the photographing target OBJ from the +Y side. When the photographing part 11 photographs the photographing target OBJ and when the photographing part 12 photographs the photographing target OBJ, the illumination part 22 illuminates the photographing target OBJ from the -Y side.

In the photographing apparatus 1, each of the illumination part 21 and the illumination part 22 is not limited to being maintained in a turned-on state. For example, in the photographing apparatus 1, it is sufficient that each of the illumination part 21 and the illumination part 22 can stably illuminate the photographing target OBJ when at least the photographing part 11 and the photographing part 12 photograph the photographing target OBJ.

The illumination part 21 illuminates the photographing target OBJ from the +Y side and the illumination part 22 illuminates the photographing target OBJ from the -Y side, and thus the entirety of the photographing target OBJ can be illuminated by the illumination part 21 and the illumination part 22.

Each of the illumination part 21 and the illumination part 22 performs front illumination for illuminating the front surface of the photographing target OBJ and rear illumination for illuminating the photographing target OBJ from behind. Specifically, the illumination part 21 performs front illumination for illuminating the front surface of the photographing target OBJ when the photographing part 11 performs photographing. The illumination part 21 performs rear illumination for illuminating the photographing target OBJ from behind when the photographing part 12 performs photographing. Similarly, the illumination part 22 performs front illumination for illuminating the front surface of the photographing target OBJ when the photographing part 12 performs photographing. The illumination part 22 performs rear illumination for illuminating the photographing target OBJ behind when the photographing part 11 performs photographing.

### (Configuration Example of Illumination Part 21 and Illumination Part 22)

Configuration examples of the illumination part 21 and the illumination part 22 will be described. As described above, each of the illumination part 21 and the illumination part 22 performs front surface illumination and rear illumination on the photographing target OBJ at the same time. Therefore, it is desirable that each of the illumination part 21 and the illumination part 22 uniformly emits illumination light from a wide surface so as to uniformly illuminate the photographing target OBJ.

Configuration examples of the illumination part 21 and the illumination part 22 that uniformly illuminate the photographing target OBJ in the photographing apparatus 1 will be described. Since the illumination part 21 and the illumination part 22 have the same configuration, the illumination part 21 will be described, and the description of the illumination part 22 will be omitted. The illumination part 22 is installed in a direction different from that of the illumination part 21.

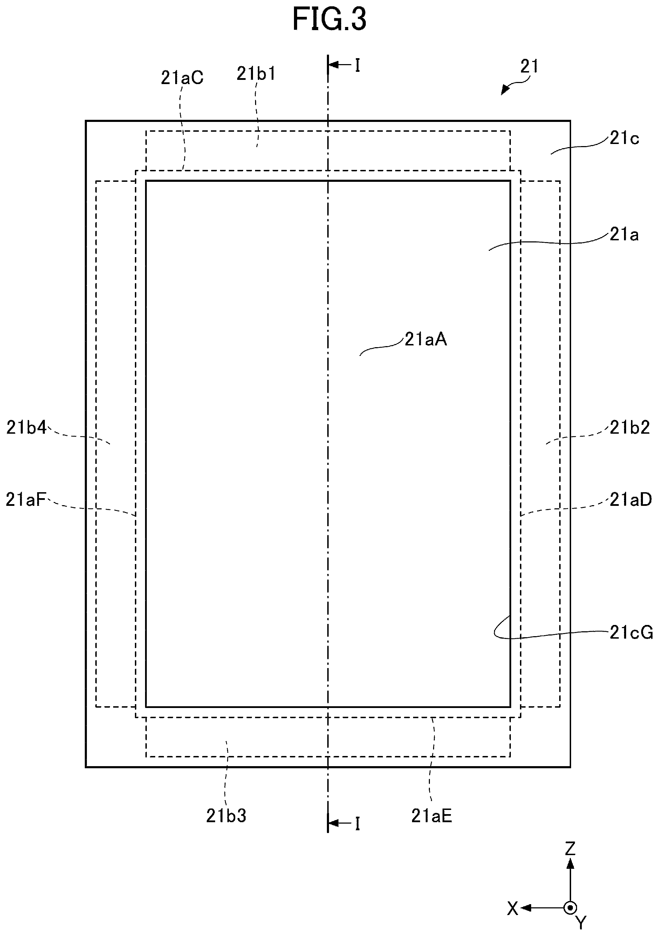

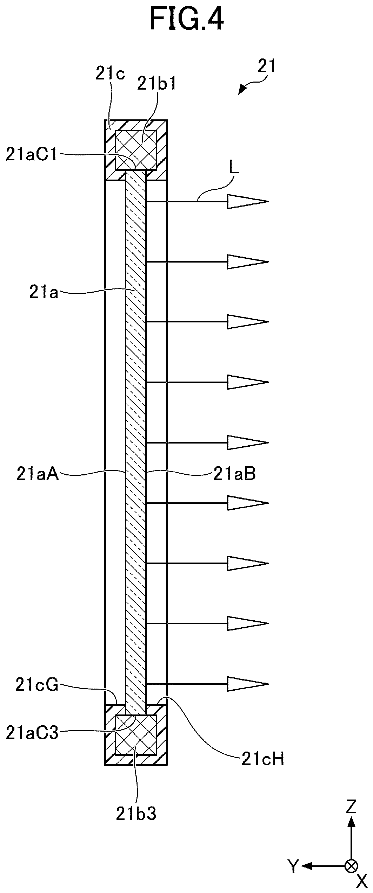

FIG. 3 is a front view of the illumination part 21 in the photographing apparatus 1, which is an example of the photographing apparatus according to the first embodiment. FIG. 4 is a cross-sectional view of the illumination part 21 in the photographing apparatus 1, which is an example of the photographing apparatus according to the first embodiment. Specifically, FIG. 4 is a cross-sectional view taken along line I-I in FIG. 3.

The illumination part 21 includes a light guide plate 21a, a light source 21b1, a light source 21b2, a light source 21b3, a light source 21b4, and a housing 21c. Since the light guide plate 21a is transparent, the photographing part 11 can photograph the photographing target OBJ through the light guide plate 21a.

### (Light Guide Plate 21a)

The light guide plate 21a guides light so that light from the light sources 21b1, 21b2, 21b3, and 21b4 propagates inside the light guide plate 21a. The light guide plate 21a emits the light propagating inside from a main surface 21aB serving as a light-emitting surface, (the main surface 21aB will be described later).

The light guide plate 21a has a plate shape that is a quadrangle in a front view. The light guide plate 21a is formed of a transparent plate. The light guide plate 21a is formed of a transparent resin, for example, acrylic resin. The light guide plate 21a has a main surface 21aA on the +Y side and a main surface 21aB on the -Y side. The light guide plate 21a has an end surface 21aC on the +Z side, an end surface 21aD on the -X side, an end surface 21aE on the -Z side, and an end surface 21aF on the +X side.

The main surface 21aA faces the photographing part 11. The main surface 21aB faces the photographing target OBJ. The light propagating inside the light guide plate 21a is emitted from the main surface 21aB. A projection or recess pattern is formed on the main surface 21aB in order to control emission and diffusion of light propagating inside the light guide plate 21a. Since the light guide plate 21a has a projection or recess pattern on the main surface 21aB, the light propagated inside the light guide plate 21a can be emitted from the main surface 21aB to uniformly irradiate the photographing target OBJ. In other words, the light guide plate 21a has a projection or recess pattern in the main surface 21aB, and thus the illumination part 21 can uniformly illuminate the photographing target OBJ.

The light guide plate 21a emits light L from the main surface 21aB. In other words, the main surface 21aB serves as a light-emitting surface of the illumination part 21 (light guide plate 21a). The light L emitted from the main surface 21aB of the light guide plate 21a uniformly illuminates the photographing target OBJ.

On the main surface 21aA of the light guide plate 21a, the light emitted from each of the light sources 21b1, 21b2, 21b3, and 21b4 and propagating inside the light guide plate 21a is prevented from being emitted from the main surface 21aA. Thus, even when the photographing part 11 photographs the photographing target OBJ through the light guide plate 21a, it is possible to suppress the influence of the light propagating through the light guide plate 21a and directly emitted from the light guide plate 21a.

The end surface 21aC is provided at a position facing the light source 21b1. The light emitted from the light source 21b1 enters the light guide plate 21a from the end surface 21aC. Similarly, the end surface 21aD, the end surface 21aE, and the end surface 21aF are provided at positions facing the light source 21b2, the light source 21b3, and the light source 21b4, respectively. The light emitted from each of the light sources 21b2, 21b3, and 21b4 enters the light guide plate 21a from any of the end surface 21aD, end surface 21aE, and end surface 21aF facing each other.

### (Light Source 21b1, Light Source 21b2, Light Source 21b3, and Light source 21b4)

The light sources 21b1, 21b2, 21b3, and 21b4 emit light to the light guide plate 21a. The light sources 21b1, 21b2, 21b3, and 21b4 introduce light into the light guide plate 21a from the end surfaces 21aC, 21aD, 21aE, and 21aF, respectively.

Each of the light sources 21b1, 21b2, 21b3, and 21b4 includes light-emitting elements. The number of light-emitting elements included in each of the light sources 21b1, 21b2, 21b3, and 21b4 may be one or more. The light-emitting element is, for example, a light-emitting diode (LED) or a laser diode (LD). An organic electroluminescent element may be used as a light-emitting element. Furthermore, as each of the light sources 21b1, 21b2, 21b3, and 21b4, a cold-cathode tube, a fluorescent tube, a light bulb, or the like may be used as long as light can be supplied to the light guide plate 21a.

### (Housing 21c)

The housing 21c holds the light guide plate 21a and the light source 21b1, the light source 21b2, the light source 21b3, and the light source 21b4. The housing 21c has a frame shape in a front view. The housing 21c has an opening 21cG on the +Y side and an opening 21cH on the -Y side. The main surface 21aA of the light guide plate 21a is exposed from the opening 21cG. The main surface 21aB of the light guide plate 21a is exposed from the opening 21cH.

Since the housing 21c has a frame shape, the photographing part 11 can photograph the photographing target OBJ via the light guide plate 21a.

### <Summary>

According to the photographing apparatus of the first embodiment, a photographing target can be photographed from both +Y and -Y sides. According to the photographing apparatus of the first embodiment, the first photographing part and the second photographing part perform photographing at the same time, and thus it is possible to simultaneously photograph the photographing target from both +Y and -Y sides. Furthermore, according to the photographing apparatus of the first embodiment, by setting the positional relationship in which the photographing part, the illumination part, the photographing target, the illumination part, and the photographing part are arranged in a particular order, both front surface and rear surface of a photographing target can be photographed at the same time.

According to the photographing apparatus of the first embodiment, since the illumination part performs front surface illumination and rear illumination, it is possible to clearly photograph the contour and the front and rear surfaces of the photographing target. According to the photographing apparatus of the first embodiment, since the illumination part performs front surface illumination and rear illumination, it is possible to acquire an image with less noise for the contour and the front and rear surfaces of the photographing target. By acquiring an image with less noise for the contour and front and rear surfaces of the object to be photographed, the state of the contour and the state of the front and rear surfaces of the object to be photographed can be observed better. By acquiring an image with less noise for the contour and the front and rear surfaces of the photographing target, it is possible to reduce a processing load, such as noise removal in post-processing, and reduce a processing load in image processing.

Furthermore, according to the photographing apparatus 1 as an example of the photographing apparatus according to the first embodiment, since the illumination part 21 and the illumination part 22 are illumination devices capable of transmitting light through the light-emitting surface, a function of illuminating the front surface of the photographing target OBJ (front surface illumination) and a backlight function (rear illumination) can be realized by one illumination part. The number of devices required for photographing can be reduced by performing a function of illuminating the front surface of the photographing target OBJ (front surface illumination) and a backlight function (rear illumination) by one illumination part.

According to the photographing apparatus of the first embodiment, the second photographing part has the same functional configuration as the first photographing part, and the second illumination part has the same functional configuration as the first illumination part, so that the photographing target can be photographed from both +Y and -Y sides under the same conditions.

In the example of the photographing apparatus 1, the photographing part 11 is arranged in such a manner that the photographing direction is perpendicular to the main surface 21aB (light-emitting surface) of the illumination part 21, but the photographing direction of each of the first photographing part and the second photographing part in the photographing apparatus according to the first embodiment is not limited to the above example. The photographing direction of each of the first photographing part and the second photographing part in the photographing apparatus according to the first embodiment may be an oblique direction with respect to the light-emitting surface of the corresponding one of the first illumination part or the second illumination part. In the example of the photographing apparatus 1, the photographing part 11 may be arranged in such a manner that the photographing direction is oblique to the main surface 21aA and the main surface 21aB (light-emitting surface) of the illumination part 21.

More specifically, in the photographing apparatus according to the first embodiment, each of the first photographing part and the second photographing part may be arranged at a position where the photographing target can be captured through the corresponding one of the first illumination part or second illumination part.

For example, to explain using the photographing part 11 and the illumination part 21 in the photographing apparatus 1, which is an example of the photographing apparatus according to the first embodiment, the photographing part 11 may photograph a place to be photographed in the photographing target OBJ through the light guide plate 21a in the illumination part 21. For example, in FIG. 1, the photographing part 11 may be shifted in at least one of the X-axis direction and the Z-axis direction within a range in which the photographing target OBJ can be photographed through the illumination part 21, and the photographing direction may be inclined with respect to the Y-axis direction according to the shifted position. The position in the Y-axis direction may also be shifted in the Y-axis direction as appropriate.

The photographing part 11 and the illumination part 21 in the photographing apparatus 1 will be more specifically described. A line extending from a line connecting a position of the photographing target OBJ to be photographed and an edge of a light-emitting surface (main surface 21aB) of the light guide plate 21a included in the illumination part 21 forms a region having a frustum (truncated pyramid) shape on the +Y side of the illumination part 21. The photographing part 11 may be arranged inside the region having the frustum (truncated pyramid) shape. The photographing direction of the photographing part 11 may be a direction of a line connecting a position of the photographing target OBJ to be photographed and a position of the photographing part 11. For example, the photographing direction of the photographing part 11 may be perpendicular to the light-emitting surface (main surface 21aB) of the light guide plate 21a included in the illumination part 21, or may be inclined with respect to the light-emitting surface.

The configuration of the photographing part 12 is similar to that of the photographing part 11.

In the photographing apparatus according to the first embodiment, in the case where the first photographing part, the first illumination part, the photographing target, the second illumination part, and the second photographing part are arranged on the same plane, the plane is not limited to a plane perpendicular to the light-emitting surface of each of the first illumination part and the second illumination part. In the photographing apparatus according to the first embodiment, in the case where the first photographing part, the first illumination part, the photographing target, the second illumination part, and the second photographing part are arranged on the same plane, the plane may be inclined with respect to the light-emitting surface of each of the first illumination part and the second illumination part.

Similarly, in the photographing apparatus according to the first embodiment, in the case where the first photographing part, the first illumination part, the photographing target, the second illumination part, and the second photographing part are arranged on the same axis, the axis is not limited to a plane perpendicular to the light-emitting surface of each of the first illumination part and the second illumination part. In the photographing apparatus according to the first embodiment, in the case where the first photographing part, the first illumination part, the photographing target, the second illumination part, and the second photographing part are arranged on the same axis, the axis may be inclined with respect to the light-emitting surface of each of the first illumination part and the second illumination part.

Furthermore, in the photographing apparatus according to the first embodiment, at least the first illumination part, the photographing target, and the second illumination part may be arranged on the same plane. In the case where the first illumination part, the photographing target, and the second illumination part are arranged on the same plane, the first photographing part and the second photographing part may be arranged on the same plane or need not be arranged on the same plane.

Similarly, in the photographing apparatus according to the first embodiment, at least the first illumination part, the photographing target, and the second illumination part may be arranged on the same axis. In the case where the first illumination part, the photographing target, and the second illumination part are arranged on the same axis, the first photographing part and the second photographing part may be arranged on the same axis or need not be arranged on the same axis.

The same applies to the embodiments described hereinafter.

In the photographing apparatus 1, taking the photographing part 11 as an example of a first photographing part, the illumination part 21 is an example of a first illumination part, the photographing part 12 is an example of a second photographing part, and the illumination part 22 is an example of a second illumination part. As for the illumination part 21, the main surface 21aA is an example of a first main surface, and the main surface 21aB is an example of a second main surface and a light-emitting surface.

### <<Second Embodiment>>

A photographing apparatus according to a second embodiment will be described. The photographing apparatus according to the second embodiment further includes a third photographing part provided on the +Y side (first side) and a fourth photographing part provided on the -Y side (second side), in addition to the same components as those of the photographing apparatus according to the first embodiment.

### <Photographing Apparatus 2>

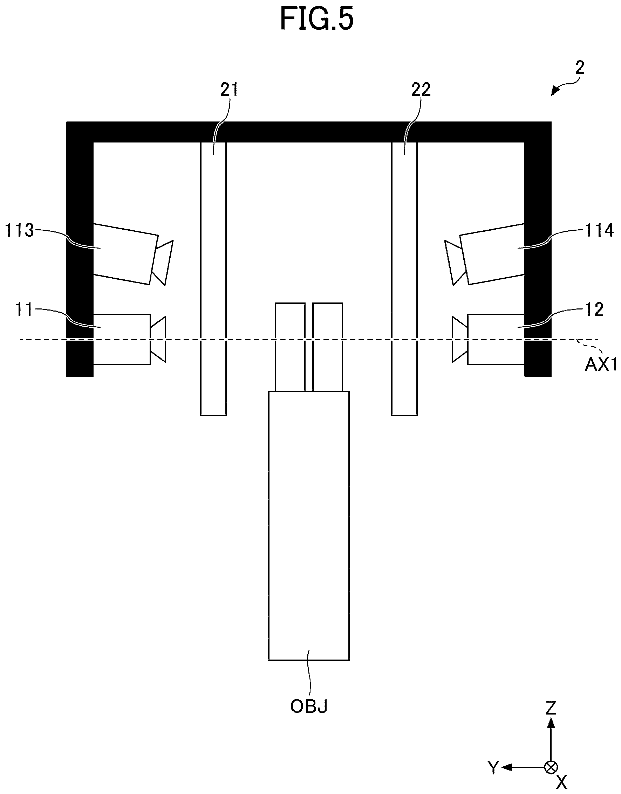

The photographing apparatus according to the second embodiment will be described using a photographing apparatus 2, which is an example of the photographing apparatus according to the second embodiment. FIG. 5 is a side view illustrating a schematic configuration of the photographing apparatus 2 as an example of the photographing apparatus according to the second embodiment.

The photographing apparatus 2 further includes a photographing part 113 and a photographing part 114 in addition to the same components as those of the photographing apparatus 1.

The photographing part 113 photographs the photographing target OBJ from the +Y side. In other words, the photographing part 113 photographs the photographing target OBJ from the same side as the photographing part 11. The photographing part 113 is provided above the photographing part 11 (the +Z side). The photographing part 113 is provided on the plane S1 in FIG. 1. The photographing part 113 is provided to be inclined downward.

The photographing part 114 photographs the photographing target OBJ from the -Y side. In other words, the photographing part 114 photographs the photographing target OBJ from the same side as the photographing part 12. The photographing part 114 is provided above the photographing part 12 (the +Z side). The photographing part 114 is provided on the plane S1 in FIG. 1. The photographing part 114 is provided to be inclined downward.

### <Summary>

According to the photographing apparatus of the second embodiment, a photographing target can be photographed from both +Y and -Y sides, similarly to the photographing apparatus of the first embodiment. According to the photographing apparatus of the second embodiment, the photographing target OBJ can be photographed from more directions.

The photographing apparatus 2 includes the photographing part 113 and the photographing part 114, but may include only one of the photographing part 113 or the photographing part 114.

The photographing part 113 is an example of a third photographing part, and the photographing part 114 is an example of a fourth photographing part.

### <<Third Embodiment>>

A photographing apparatus according to a third embodiment will be described. The photographing apparatus according to the third embodiment further includes, similarly to the invention according to the second embodiment, a third photographing part provided on the first side and a fourth photographing part provided on the second side, in addition to the same components as those of the photographing apparatus according to the first embodiment. The photographing apparatus according to the third embodiment differs from the photographing apparatus according to the second embodiment in the arrangement of the photographing parts.

### <Photographing Apparatus 3>

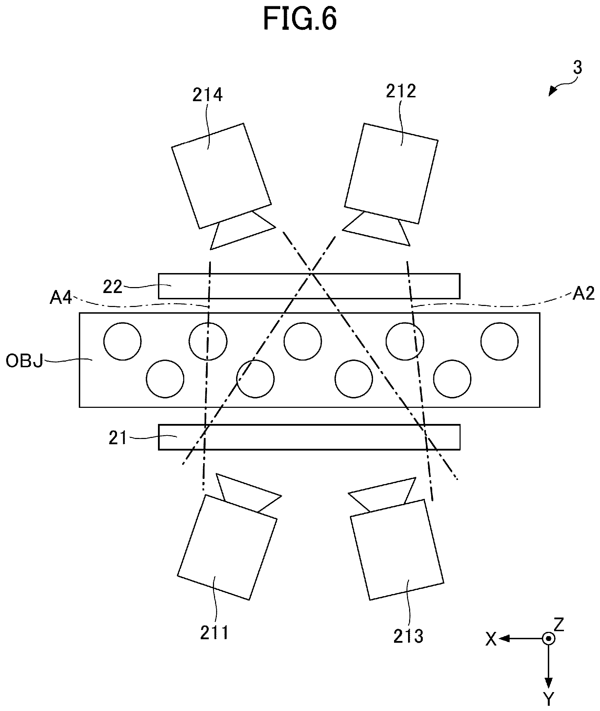

The photographing apparatus according to the third embodiment will be described using a photographing apparatus 3, which is an example of the photographing apparatus according to the third embodiment. FIG. 6 is a top view illustrating a schematic configuration of a photographing apparatus 3 as an example of the photographing apparatus according to the third embodiment.

The photographing apparatus 3 includes a photographing part 211 and a photographing part 213 instead of the photographing part 11 of the photographing apparatus 1. The photographing apparatus 3 includes a photographing part 212 and a photographing part 214 instead of the photographing part 12 of the photographing apparatus 1. In FIG. 6, the photographing range of the photographing part 212 is illustrated as A2, and the photographing range of the photographing part 214 is illustrated as A4.

The photographing part 211 and the photographing part 213 photograph the photographing target OBJ from the +Y side. In other words, the photographing part 213 photographs the photographing target OBJ from the same side as the photographing part 211. The photographing part 213 is provided right to the photographing part 211 (the -X side). The photographing part 211 is provided to face the photographing part 212. The photographing part 213 is provided to face the photographing part 214. The photographing part 211 is provided to be inclined to the -X side with respect to the Y-axis direction. The photographing part 213 is provided to be inclined to the +X side with respect to the Y-axis direction.

The photographing part 211 and the photographing part 213 are provided with respective inclinations with respect to the Y-axis direction in such a manner that the photographing range of each of the photographing part 211 and the photographing part 213 is transmitted through the light-emitting surface of each of the illumination part 21 and the illumination part 22.

The photographing part 212 and the photographing part 214 photograph the photographing target OBJ from the -Y side. In other words, the photographing part 214 photographs the photographing target OBJ from the same side as the photographing part 212. The photographing part 214 is provided left to the photographing part 212 (the +X side). The photographing part 212 is provided to face the photographing part 211. The photographing part 214 is provided to face the photographing part 213. The photographing part 212 is provided to be inclined to the +X side with respect to the Y-axis direction. The photographing part 214 is provided to be inclined to the -X side with respect to the Y-axis direction.

The photographing part 212 and the photographing part 214 are provided with respective inclinations with respect from the Y-axis direction in such a manner that the photographing range of each of the photographing part 212 and the photographing part 214 is transmitted through the light-emitting surface of each of the illumination part 21 and the illumination part 22.

### <Summary>

According to the photographing apparatus of the third embodiment, a photographing target can be photographed from both +Y and -Y sides, similarly to the photographing apparatus of the first embodiment. According to the photographing apparatus of the third embodiment, the photographing target OBJ can be photographed from more directions.

The photographing apparatus 3 includes the photographing part 211 and the photographing part 213, but need include only one of the photographing part 211 or the photographing part 213. The photographing apparatus 3 includes the photographing part 212 and the photographing part 214, but need include only one of the photographing part 212 or the photographing part 214.

In the case where the photographing part 211 is a first photographing part, the photographing part 212 is an example of a second photographing part, the photographing part 213 is an example of a third photographing part, and the photographing part 214 is an example of a fourth photographing part.

### <<Mode of Use of Photographing Apparatus according to Present Embodiment>>

A mode of use of the photographing apparatus according to the present embodiment will be described. Here, descriptions will be given using the photographing apparatus 1 which is an example of the photographing apparatus according to the first embodiment. The same applies to the photographing apparatus according to the second embodiment and the photographing apparatus according to the third embodiment.

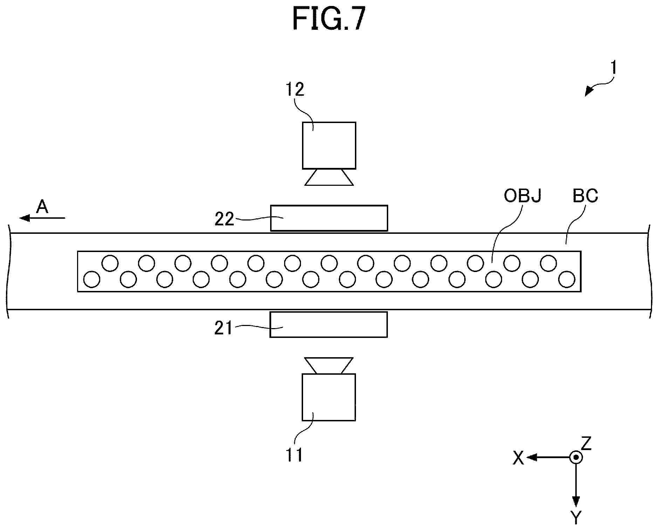

FIG. 7 is a diagram illustrating a use state of the photographing apparatus 1, which is an example of the photographing apparatus according to the present embodiment. Specifically, an example in which the photographing apparatus 1 is applied to photograph a photographing target OBJ conveyed toward the +X side along the X-axis direction by a belt conveyor BC will be described.

The belt conveyor BC conveys the photographing target OBJ toward the +X side along the X-axis direction as indicated by arrow A. While the photographing target OBJ is being conveyed by the belt conveyor BC, the photographing apparatus 1 photographs the photographing target OBJ.

The photographing apparatus 1 photographs the photographing target OBJ while the photographing target OBJ is being conveyed, and thus a plurality of places of the photographing target OBJ can be observed. In particular, in the case where the photographing target OBJ is a long object, the photographing target OBJ can be observed from one end to the other end along the X-axis direction in the photographing target OBJ by photographing the photographing target OBJ while the photographing target OBJ is being conveyed.

In the case where the photographing target OBJ is conveyed along the X-axis direction, the photographing direction of each of the photographing part 11 and the photographing part 12 is a direction intersecting the X-axis direction, for example, the photographing is performed from the Y-axis direction perpendicular to the X-axis direction. The light-emitting surfaces (the main surface 21aB in FIG. 4) of the illumination part 21 and the illumination part 22 are parallel to the X-axis direction, which is the conveyance direction.

The X-axis direction is an example of a first direction.

### <<Fourth Embodiment>>

A photographing apparatus according to a fourth embodiment will be described. The photographing apparatus according to the fourth embodiment includes a moving part that moves the first photographing part, the first illumination part, the second photographing part, and the second illumination part, in addition to the same components as those of the photographing apparatus according to the present embodiment.

### <Photographing Apparatus 4>

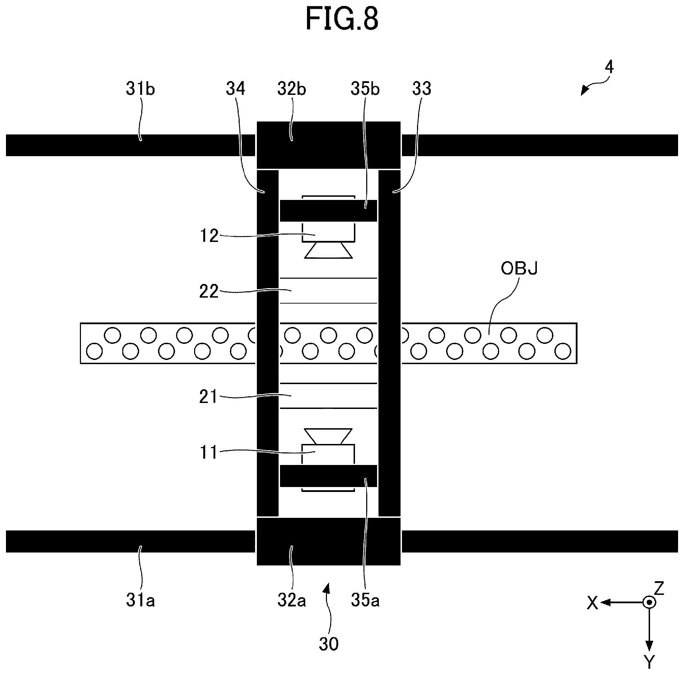

The photographing apparatus according to the fourth embodiment will be described using a photographing apparatus 4, which is an example of the photographing apparatus according to the fourth embodiment. FIG. 8 is a top view illustrating a schematic configuration of a photographing apparatus 4 as an example of the photographing apparatus according to the fourth embodiment. In the following description, a configuration based on the photographing apparatus 1, which is an example of the photographing apparatus according to the first embodiment, will be described, but the same applies to each of the photographing apparatus according to the second embodiment and the photographing apparatus according to the third embodiment.

The photographing apparatus 4 further includes a moving part 30 that moves the photographing part 11, the illumination part 21, the photographing part 12, and the illumination part 22, in addition to the same components as those of the photographing apparatus 1. It is assumed that the photographing target OBJ is in a stationary state.

The moving part 30 moves the photographing part 11, the illumination part 21, the photographing part 12, and the illumination part 22 while holding them altogether. The moving part 30 includes a rail 31a and a rail 31b, a moving body 32b and a moving body 32b, a beam 33 and a beam 34, and an attachment 35a and an attachment 35b.

Each of the rail 31a and the rail 31b is provided to extend along the X-axis direction. The rail 31b is provided on the -Y side of the rail 31a so as to be separated from the rail 31a.

The moving body 32a moves along the rail 31a. The moving body 32b moves along the rail 31b. In other words, each of the moving body 32a and the moving body 32b moves along the X-axis direction.

The moving part 30 includes beams 33 and 34 that connect the moving body 32a and the moving body 32b. The beam 34 is provided on the +X side of the beam 33 so as to be separated from the beam 33. The illumination part 21 and the illumination part 22 are attached between the beam 33 and the beam 34. The moving part 30 includes an attachment 35a to which the photographing part 11 is attached and an attachment 35b to which the photographing part 12 is attached between the beams 33 and 34. The attachment 35a holds the photographing part 11. The mounting portion 35b holds the photographing part 12.

The moving part 30 altogether holds the photographing part 11, the illumination part 21, the photographing part 12, and the illumination part 22 between the moving body 32a and the moving body 32b. Then, the moving body 32a and the moving body 32b move along the X-axis direction, and thereby the moving part 30 moves the photographing part 11, the illumination part 21, the photographing part 12, and the illumination part 22 integrally along the X-axis direction.

The moving part 30 altogether holds the photographing part 11, the illumination part 21, the photographing part 12, and the illumination part 22 between the moving body 32a and the moving body 32b, and thus, it is possible to keep the positional relationship between the photographing part 11, the illumination part 21, the photographing part 12, and the illumination part 22 constant. By keeping the positional relationship among the photographing part 11, the illumination part 21, the photographing part 12, and the illumination part 22 constant, a state in which the optical axis is adjusted or the like can be maintained during photographing.

The photographing apparatus 4 includes the moving part 30, and thus can photograph the photographing target OBJ while the moving part 30 moves the photographing part 11, the illumination part 21, the photographing part 12, and the illumination part 22. The moving part 30 photographs the photographing target OBJ while moving the photographing part 11, the illumination part 21, the photographing part 12, and the illumination part 22, and thus a plurality of places of the photographing target OBJ can be observed. In particular, in a case where the photographing target OBJ is a long object, the photographing target OBJ can be observed from one end to the other end along the X-axis direction of the photographing target OBJ by performing photographing while the moving part 30 moves the photographing part 11, the illumination part 21, the photographing part 12, and the illumination part 22.

### <Summary>

According to the photographing apparatus of the fourth embodiment, a photographing target can be photographed from both +Y and -Y sides, similarly to the photographing apparatus of the first embodiment. In addition, according to the photographing apparatus of the fourth embodiment, a wide area of the photographing target OBJ can be photographed.

In the above descriptions, the photographing target OBJ is in a stationary state, but the moving photographing target OBJ, such as the photographing target OBJ on the belt conveyor BC, may be photographed in a state where the moving part 30 further moves the photographing part 11, the illumination part 21, the photographing part 12, and the illumination part 22.

### <<Modified Example of Illumination Part in Photographing Apparatus according to Present Embodiment>>

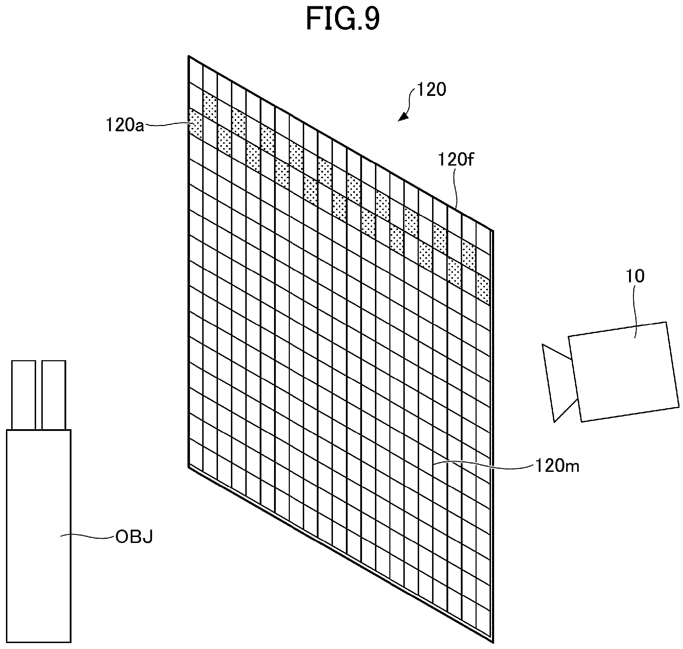

A modified example of the illumination part in the photographing apparatus according to the present embodiment will be described. FIG. 9 is a diagram illustrating an illumination part 120 which is a modified example of the illumination part in the photographing apparatus according to the present embodiment. In FIG. 9, a photographing part 10 and a photographing target OBJ are illustrated in order to show the positional relationship between the photographing part and the photographing target. The photographing part 10 illustrates the photographing part 11, the photographing part 12, and the like in the photographing apparatus 1, the photographing apparatus 2, the photographing apparatus 3, and the photographing apparatus 4.

The illumination part 120 includes a frame portion 120f and a mesh portion 120m. The mesh portion 120m is provided in the frame portion 120f. The mesh portion 120m is formed of, for example, a metal mesh. The mesh portion 120m is permeable. The illumination part 120 includes a plurality of light-emitting elements 120m in the mesh portion 120a. The light-emitting elements 120a are embedded in the mesh portion 120m. The light-emitting elements 120a are, for example, an LED.

Since the illumination part 120 includes the plurality of light-emitting elements 120m in the mesh portion 120a, the illumination part 120 can illuminate the photographing target OBJ. Since the illumination part 120 is configured by the mesh portion 120m, the photographing part 10 can photograph the photographing target OBJ through the mesh portion 120m of the illumination part 120.

The illumination part in the illumination device according to the present embodiment is not limited to the above-described example, and for example, a transparent display or the like that emits light only in one direction may be applied as the illumination part.

### <<Modified Example of Photographing Apparatus according to Second Embodiment>>

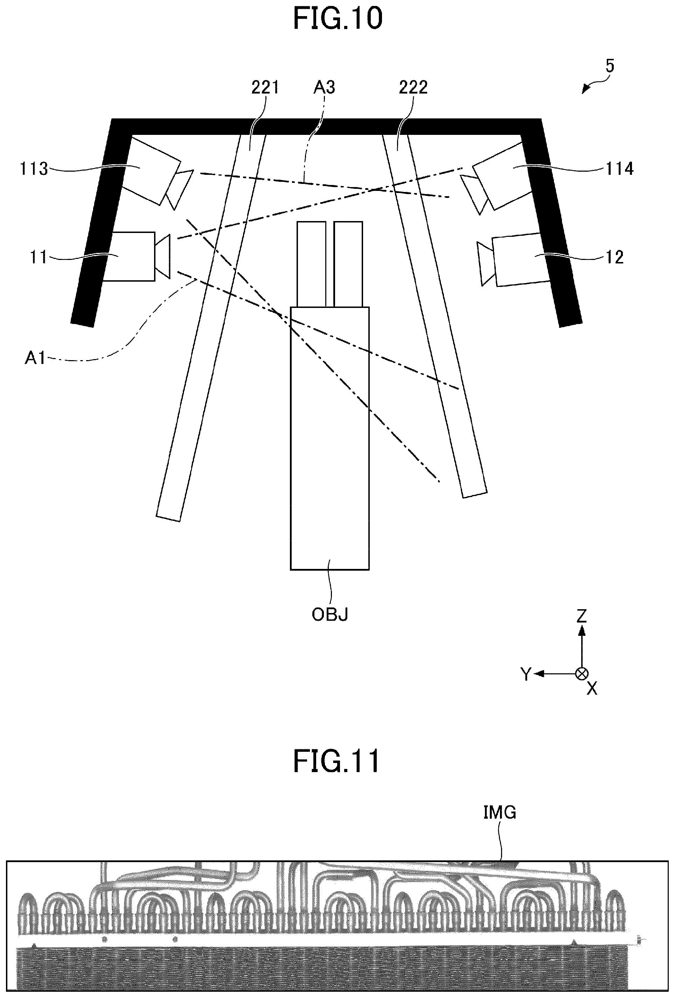

A modified example of the photographing apparatus according to the second embodiment will be described. FIG. 10 is a side view illustrating a schematic configuration of the photographing apparatus 5 as a modified example of the photographing apparatus according to the second embodiment. In FIG. 10, the photographing range of the photographing part 11 is illustrated as A1, and the photographing range of the photographing part 113 is illustrated as A3.

The photographing apparatus 5 includes an illumination part 221 instead of the illumination part 21 of the photographing apparatus 2. The illumination part 221 is provided to be inclined with respect to the vertical direction (Z-axis direction). The photographing apparatus 5 includes an illumination part 222 instead of the illumination part 22 of the photographing apparatus 2. The illumination part 222 is provided to be inclined with respect to the vertical direction (Z-axis direction).

The photographing apparatus 5 can photograph the photographing target OBJ in a state where the photographing target OBJ is uniformly illuminated in the photographing part 11, the photographing part 12, the photographing part 113, and the photographing part 114 by providing each of the illumination part 221 and the illumination part 222 to be inclined with respect to the vertical direction.

### <<Operation Example of Photographing Apparatus according to Present Embodiment>>

An example of photographing by operating the photographing apparatus according to the present embodiment will be described. FIG. 11 is a diagram illustrating an image taken by the photographing apparatus according to the present embodiment. FIG. 11 is an image IMG obtained by photographing a heat exchanger of an air conditioner as a photographing target OBJ.

According to the photographing apparatus of the present embodiment, the contour of a photographing target can be clearly imaged as shown in the image IMG. According to the photographing apparatus of the present embodiment, the front surfaces of a photographing target can be clearly imaged as shown in the image IMG.

### <<Application Example of Photographing Apparatus according to Present Embodiment>>

An application example of the photographing apparatus according to the present embodiment will be described. As an application example of the photographing apparatus according to the present embodiment, an example of photographing flat multi-hole tubes as a photographing target will be described.

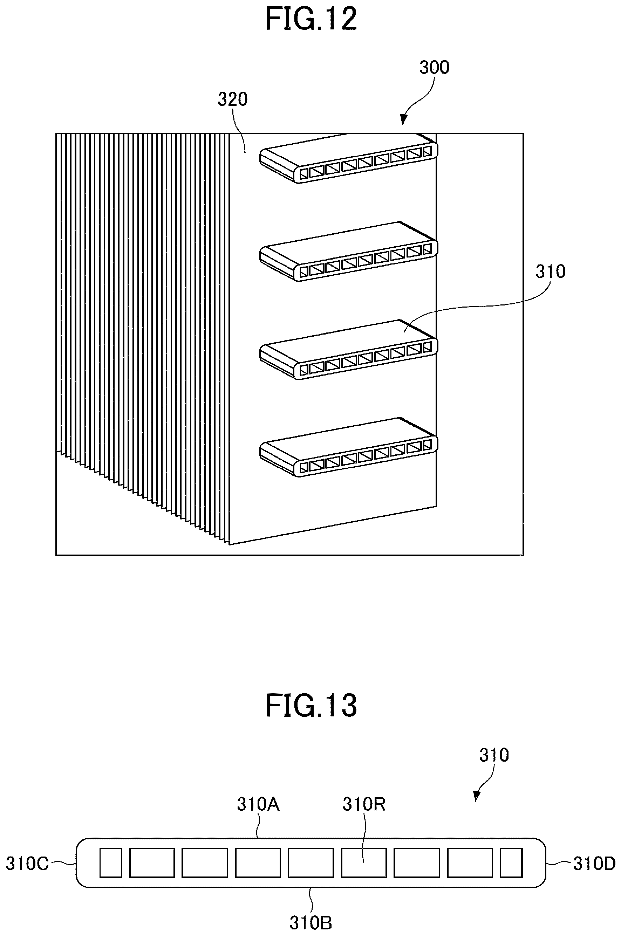

FIGS. 12 and 13 are diagrams illustrating flat multi-hole tubes as an example of a photographing target of the photographing apparatus according to the present embodiment. FIG. 12 is a diagram illustrating an outline of a heat exchanger 300 in which flat multi-hole tubes 310 are used. FIG. 13 is a side view of the flat multi-hole tube 310 as viewed from the longitudinal direction.

The flat multi-hole tube is a tube used in the heat exchanger 300 and through which a heating medium flows. The heat exchanger 300 includes a plurality of flat multi-hole tubes 310 and a plurality of fins 320. The flat multi-hole tubes 310 are provided to penetrate the plurality of fins 320. The flat multi-hole tubes 310 are brazed to the plurality of fins 320. The heat of the air flowing between the plurality of fins 320 is cooled or heated by the heating medium flowing through the flat multi-hole tube 310.

The flat multi-hole tube 310 has a flat shape that is long in the horizontal direction and short in the vertical direction in a side view seen from the longitudinal direction. The flat multi-hole tube 310 has an upper surface 310A and a lower surface 310B. The flat multi-hole tube 310 has a side surface 310C and a side surface 310D that connect the upper surface 310A and the lower surface 310B.

Each of the upper surface 310A and the lower surface 310B has a larger area than each of the side surface 310C and the side surface 310D. The upper surface 310A and the lower surface 310B are connected to the plurality of fins 320 at long distances.

The flat multi-hole tube 310 includes a plurality of flow passages 310R therein. A heating medium flows through the plurality of flow passages 310R.

The flat multi-hole tube 310 has a length of, for example, about 1.5 meters to 2.5 meters in the longitudinal direction. Therefore, it is difficult to visually inspect the surfaces of the flat multi-hole tubes 310, particularly the upper surface 310A and the lower surface 310B.

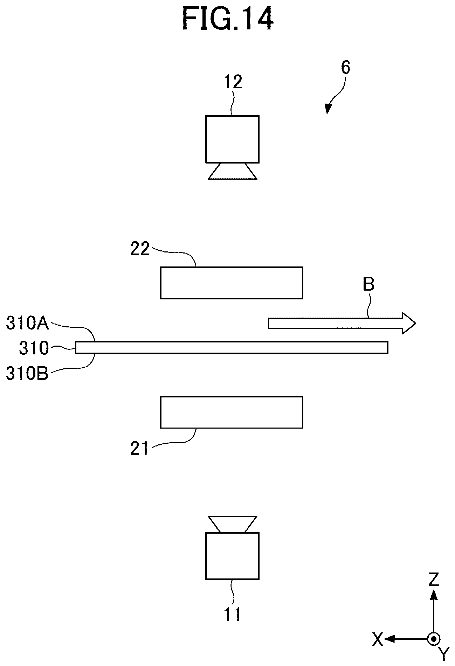

An example in which the photographing apparatus according to the present embodiment is applied to the case where the flat multi-hole tubes 310 are a photographing target will be described. FIG. 14 is a diagram illustrating a state in which the flat multi-hole tube 310 is photographed using the photographing apparatus 6 which is an example of the photographing apparatus according to the present embodiment.

When the photographing apparatus 6 photographs the flat multi-hole tube 310, the photographing part 11, the illumination part 21, the flat multi-hole tube 310, the illumination part 22, and the photographing part 12 are arranged in this order. In the example in FIG. 14, the photographing part 11, the illumination part 21, the flat multi-hole tube 310, the illumination part 22, and the photographing part 12 are arranged side by side in the Z-axis direction, that is, the vertical direction.

The flat multi-hole tube 310 is conveyed in the direction of arrow B shown in FIG. 14 by, for example, rollers or the like. The photographing part 11 photographs the lower surface 310B of the flat multi-hole tube 310 when the flat multi-hole tube 310 is conveyed. The photographing part 12 photographs the upper surface 310A of the flat multi-hole tube 310 when the flat multi-hole tube 310 is conveyed.

Therefore, the photographing apparatus 6 can continuously image the upper surfaces 310A and the lower surfaces 310B of a plurality of the flat multi-hole tubes 310 in parallel. As described above, each flat multi-hole tube 310 is long in the longitudinal direction and has a flat structure, but the photographing apparatus 6 can efficiently inspect the upper surfaces 310A and the lower surfaces 310B.

Although the embodiments have been described above, it will be understood that various changes in form and details can be made without departing from the spirit and scope of the claims. Various modifications and improvements such as combination or replacement with a part or all of the other embodiments are possible.

This application claims priority to Japanese Patent Application No. 2022-206330 filed on December 23, 2022 and Japanese Patent Application No. 2023-027707 filed on February 24, 2023, the entire contents of which are incorporated herein by reference.

### REFERENCE SIGNS LIST

1, 2, 3, 4, 5, 6 Photographing apparatus
10, 11, 12, 113, 114, 211, 212, 213, 214 Photographing part
21, 22, 120, 221, 222 Illumination part
21a Light guide plate
21aA, 21aB Main surface
21aC, 21aD, 21aE, 21aF End surface
21b1, 21b2, 21b3, 21b4 Light source
21c Housing
21cG, 21cH Opening
30 Moving part
31a, 31b Rail
32a, 32b Moving body
33, 34 Beam
35a, 35b Attachment
AX1 Axis
BC Belt conveyor
OBJ Photographing target
310 Flat multi-hole tube
S1 Plane

## Claims

1. A photographing apparatus, comprising:
a first photographing part configured to photograph a photographing target from a first side of a direction perpendicular to a first direction;
a second photographing part configured to photograph the photographing target from a second side opposite to the first side;
a first illumination part located between the first photographing part and the photographing target and configured to illuminate the photographing target from the first side when the first photographing part photographs the photographing target and when the second photographing part photographs the photographing target; and
a second illumination part located between the second photographing part and the photographing target and configured to illuminate the photographing target from the second side when the first photographing part photographs the photographing target and when the second photographing part photographs the photographing target.

2. The photographing apparatus according to claim 1, wherein
the first photographing part, the first illumination part, the photographing target, the second illumination part, and the second photographing part are arranged on a same plane.

3. The photographing apparatus according to claim 1 or 2, wherein
the first photographing part, the first illumination part, the photographing target, the second illumination part, and the second photographing part are arranged on a same axis.

4. The photographing apparatus according to any one of claims 1 to 3, wherein
the first photographing part photographs the photographing target through the first illumination part, and
the second photographing part photographs the photographing target through the second illumination part.

5. The photographing apparatus according to any one of claims 1 to 4, wherein
each of the first illumination part and the second illumination part includes a transparent light guide plate having a first main surface and a second main surface, light being incident from an end surface propagates through the transparent light guide plate,
and
light propagating inside the light guide plate emits from the first main surface or the second main surface of the light guide plate, whichever is closer to the photographing target.

6. The photographing apparatus according to any one of claims 1 to 5, further comprising:
a third photographing part that photographs the photographing target from the first side.

7. The photographing apparatus according to any one of claims 1 to 6, further comprising:
a fourth photographing part that photographs the photographing target from the second side.

8. The photographing apparatus according to any one of claims 1 to 7, wherein
the photographing target is conveyed in a first direction,
a photographing direction of each of the first photographing part and the second photographing part is perpendicular to the first direction,
a light-emitting surface of each of the first illumination part and the second illumination part is parallel to the first direction, and
the first photographing part and the second photographing part photograph the photographing target during conveyance of the photographing target.

9. The photographing apparatus according to any one of claims 1 to 8, further comprising:
a moving part configured to move the first photographing part, the first illumination part, the second photographing part, and the second illumination part, wherein
the first photographing part and the second photographing part photograph the photographing target while the moving part moves the first photographing part, the first illumination part, the second photographing part, and the second illumination part.

10. The photographing apparatus according to any one of claims 1 to 9, wherein
the photographing target is a flat multi-hole tube.

11. A photographing method using a photographing apparatus comprising:
a first photographing part configured to photograph a photographing target from a first side;
a second photographing part configured to photograph the photographing target from a second side opposite to the first side;
a first illumination part located between the first photographing part and the photographing target and configured to illuminate the photographing target from the first side; and
a second illumination part located between the second photographing part and the photographing target and configured to illuminate the photographing target from the second side,
the method comprising:
each of the first photographing part and the second photographing part photographing the photographing target when the first illumination part illuminates the photographing target from the first side, and
each of the second photographing part and the second photographing part photographing the photographing target when the second illumination part illuminates the photographing target from the second side.
